(19) Europäisches Patentamt
European Patent Office
Office européen des brevets

(11) **EP 1 271 473 B1**

(12) **FASCICULE DE BREVET EUROPEEN**

(45) Date de publication et mention
de la délivrance du brevet:
**20.02.2008 Bulletin 2008/08**

(51) Int Cl.:
*G10L 21/02* [(2006.01)]     *H04B 1/62* [(2006.01)]

(21) Numéro de dépôt: **02291421.2**

(22) Date de dépôt: **07.06.2002**

(54) **Procédé et système de pré et de post-traitement d'un signal audio pour la transmission sur un canal fortement pertubé**

Verfahren und Vorrichtung zur Vor- und Nachbearbeitung eines Audiosignals zur Übertragung über einen sehr gestörten Kanal

System and method for PRE-AND POST-PROCESSING of an audio signal for transmission over a strongly distorted channel

(84) Etats contractants désignés:
**AT BE CH CY DE DK ES FI FR GB GR IE IT LI LU MC NL PT SE TR**

(30) Priorité: **22.06.2001 FR 0108279**

(43) Date de publication de la demande:
**02.01.2003 Bulletin 2003/01**

(73) Titulaire: **Thales**
**92200 Neuilly Sur Seine (FR)**

(72) Inventeur: **Laurent, Pierre André**
**Thales Intellectual Property**
**94117 Arceuil Cedex (FR)**

(74) Mandataire: **Lucas, Laurent Jacques**
**Marks & Clerk France**
**31-33 Avenue Aristide Briand**
**94117 Arceuil Cedex (FR)**

(56) Documents cités:
**WO-A-98/06090          US-A- 5 574 990**

- **LEFEBVRE R ET AL: "Spectral amplitude warping (SAW) for noise spectrum shaping in audio coding" INTERNATIONAL CONFERENCE ON ACOUSTICS, SPEECH, AND SIGNAL PROCESSING, 1997. ICASSP-97, 1997 MUNICH, GERMANY, LOS ALAMITOS, CA, USA,IEEE COMPUT. SOC, US, 21 avril 1997 (1997-04-21), pages 335-338, XP010226203 ISBN: 0-8186-7919-0**
- **MARTINEZ R ET AL: "Combining linear and non-linear processing in the time and in the spectral domain for non-stationary noise filtering" PROCEEDINGS OF THE IEEE-EURASIP WORKSHOP ON NONLINEAR SIGNAL AND IMAGE PROCESSING (NSIP'99), ANTALAYA, TURKEY, 20-23 JUNE 1999, pages 598-602 vol.2, XP008000688 1999, Instanbul, Turkey, Bogazici Univ, Turkey ISBN: 975-518-133-4**
- **HERNANDEZ L ET AL: "A continuous-time noise-shaping modulator for logarithmic A/D conversion" ISCAS'99. PROCEEDINGS OF THE 1999 IEEE INTERNATIONAL SYMPOSIUM ON CIRCUITS AND SYSTEMS VLSI (CAT. NO. 99CH36349), ORLANDO, FL, USA, 30 MAY-2 JUNE 1999, pages 364-367 vol.2, XP002190230 1999, Piscataway, NJ, USA, IEEE, USA ISBN: 0-7803-5471-0**

Printed by Jouve, 75001 PARIS (FR)

## Description

L'invention concerne un procédé et un système de pré-traitement et de post-traitement de signaux numérique audio ou de parole afin de maintenir la qualité du signal aussi élevée que possible en présence d'un fort niveau de bruit.

Il existe un besoin important de fournir des systèmes de codage et de décodage de haute qualité notamment dans le domaine audio numérique. Dans les applications telles que la visio-conférence, le téléphone vidéo et le multimédia, la transmission des signaux audio doit être effectuée avec un niveau de fidélité élevé quelles que soient les caractéristiques des canaux de transmission.

Le système décrit dans la demande de brevet FR publiée n° 2 815 492 du même auteur que la présente demande et ayant pour titre « Système et procédé de radiodiffusion assurant une continuité de service », consiste notamment, à remplacer les valeurs complexes discrètes des cellules d'information qui convoient normalement des informations numériques QAM (nombre limité de valeurs autorisées généralement égal à une puissance de 2) par les valeurs continues représentant des échantillons analogiques du signal audio original ou pré traité. La qualité de l'audio en sortie est pratiquement constante quelle que soit la configuration exacte du canal.

La qualité, même dans des canaux sélectifs en fréquence, est similaire à la qualité de l'AM (abréviation anglo-saxonne de Amplitude modulation) dans un canal de type Gaussien, avec une puissance diffusée qui peut être inférieure au dixième de la puissance nécessaire pour une vraie modulation d'amplitude, car aucune porteuse continue n'est transmise.

Ceci est du au fait que le récepteur effectue une compensation de gain (complexe) du canal, à chaque fréquence et à chaque instant, de façon telle qu'il n'y ait (en théorie) pas de variation de gain dans les échantillons reçus.

On peut observer que la compensation de gain a notamment l'effet suivant : dans tous les cas, le bruit additionné aux échantillons reçus après démodulation présente un spectre en fréquence plat.

Le bruit est Gaussien avec un canal simple et plus ou moins impulsif avec des canaux sélectifs en fréquence (canaux comportant des chemins de propagation multiples).

La demande de brevet WO 98/06090 divulgue un système et un procédé mettant en oeuvre une transformation non linéaire sur le signal afin d'augmenter la qualité perceptible du signal audio ou de phonie. La transformation non linéaire est appliquée sur chacune des composantes $S_k$ du spectre obtenues après une étape de fenêtrage et de transformée de Fourier.

Le brevet US 5,465,396 décrit un système de diffusion pour le signal audio numérique sur les bandes existantes larges bandes FM.

Le système et le procédé selon l'invention proposent une nouvelle approche où les traitements sont effectués non plus en considérant la composante du spectre à une fréquence k donnée, mais en tenant compte d'une valeur issue par exemple d'une moyenne ou lissage autour de cette fréquence.

L'invention propose un système reposant notamment sur les trois principes suivants :

1 - Le signal à transmettre est un signal audio pour l'oreille humaine (parole, musique, etc.),

2 - le spectre de fréquence du bruit à la sortie du démodulateur est toujours essentiellement plat, même s'il n'est pas Gaussien, lorsque le canal de propagation a des multiples trajets ou des brouillages,

3 - L'oreille travaille comme un banc de filtres qui couvre toute la gamme de fréquences utiles. Si à une fréquence donnée (ou pour des fréquences voisines), le bruit a une puissance plus faible que l'audio, seule l'audio utile est détectée (effet de masque).

L'invention concerne un procédé pour modifier un signal audio ou de parole comprenant les étapes suivantes :

au niveau de l'émission du signal :

    o étape 2a : convertir le signal audio $a(k)$ ou le signal de parole en un spectre de fréquence $S(k)$,
    o étape 2b, moyenner la valeur du niveau $a(k)$ afin d'obtenir une valeur lissée $A(k)$,
    o calculer le logarithme $L(k) = \log(A0+A(k))$ et modifier ce logarithme en utilisant une transformation linéaire simple (étape 2c), pour obtenir $L'(k)$,
    o appliquer à $S(k)$ un gain réel $g(k)$,
    o étape 3, revenir au signal temporel et étape 4, effectuer une pré-accentuation afin d'augmenter le niveau de signal audio pour les fréquences élevées,

au niveau de la réception du signal

    o étape 5 : écrêter les impulsions de bruit ,
    o étape 6 :désaccentuer le signal en utilisant une étape inverse de l'étape 4,

o étape 7 : effectuer l'analyse du signal dans le domaine fréquentiel,

o étape 8a : pour chaque fréquence ou groupe de fréquences k, calculer le niveau B(k) lissé de façon similaire à l'étape 2b) en lissant le signal b(k) qui correspond au carré du module de S'(k) obtenu à l'étape 7,

o étape 8b : calculer le logarithme du niveau de signal B(k), qui conduit à L'(k),

o étape 8c : modifier le logarithme L'(k) obtenu à l'étape 8b, en utilisant l'inverse de la transformation linéaire simple de l'étape 2c,

o étape 8d : modifier le niveau de signal à la fréquence k afin de transformer le logarithme

o étape 9 : revenir au signal temporel en utilisant un procédé identique à celui mis en oeuvre au niveau de l'émission.

Les modifications sont supportées par la descriprion en page 6 ligne 28 - étape 2 jusqu'à la page 11 ligne 7 étape 9.

L'étape 2c correspond, par exemple, à une étape de transformation du type L'(k) = L0+a(L(k) - L0) où L0 est le niveau de référence déduit de la puissance du signal d'entrée moyennée et a est un coefficient multiplicatif constant plus petit que 1.

L'étape 2d peut comprendre une étape où l'on modifie le niveau de signal à une fréquence en appliquant à S(k) un gain réel g(k) égal à exp(0.5 (L'(k)-L(k)).

Pour revenir au signal temporel on utilise, par exemple, une transformée de Fourier inverse, une fenête et un recouvrement.

Lors de l'étape 4, on peut utiliser un filtre de la forme $H(z)=(1+G)/(1+Gz^{-1})$. G est par exemple voisin de 0.7.

Lorsque le signal comprend des trames constituées d'un nombre exact de trames audio, les étapes de pré et de post-traitements sont totalement synchronisées.

L'invention concerne aussi un système de pré et de post-traitement d'un signal audio ou d'un signal de parole comprenant un émetteur et un récepteur adaptés à mettre en oeuvre les étapes du procédé comprenant les caractéristiques mentionnées précédemment.

L'invention présente notamment les avantages suivants :

- En combinant le pré et le post-traitement, on obtient un spectre en fréquence du bruit, à l'origine plat, modifié de façon telle que :

  - aux fréquences où le signal audio est fort, le niveau de bruit est augmenté,
  - aux fréquences où le niveau de signal est faible, le niveau de bruit est diminué.

- Le niveau de bruit est modifié (augmentation ou diminution) pour que le dit bruit reste en-dessous du signal utile pour pratiquement toutes les fréquences. Ceci augmente considérablement la qualité subjective de l'audio, même si la puissance totale de bruit est modifiée de façon non prédictible.
- Comme l'oreille a une sensibilité « logarithmique » (l'intensité du signal perçu à une fréquence donnée est plus ou moins proportionnelle au logarithme de son intensité réelle), le pré et le post traitement auront notamment pour but de modifier de façon correspondante le logarithme de l'intensité du signal à chaque fréquence ou sous-bande du signal audio, au niveau de l'émetteur et ensuite au niveau du récepteur.

D'autres caractéristiques et avantages de l'invention apparaîtront mieux à la lecture de la description détaillée d'un mode de réalisation pris à titre d'exemple non limitatif et illustré par les dessins annexés qui représentent :

- La figure 1, les spectres en fréquence du signal audio utile et du bruit à la réception,
- La figure 2, les spectres en fréquence souhaités pour les signaux de la figure 1,
- La figure 3, un diagramme bloc des différentes étapes à l'émission selon l'invention,
- Les figures 4 et 5, les spectres en fréquence du signal audio utile transmis,
- La figure 6, un diagramme bloc des différentes étapes à la réception,
- Les figures 7 et 8, les spectres en fréquence du signal audio utile et du bruit à la réception.

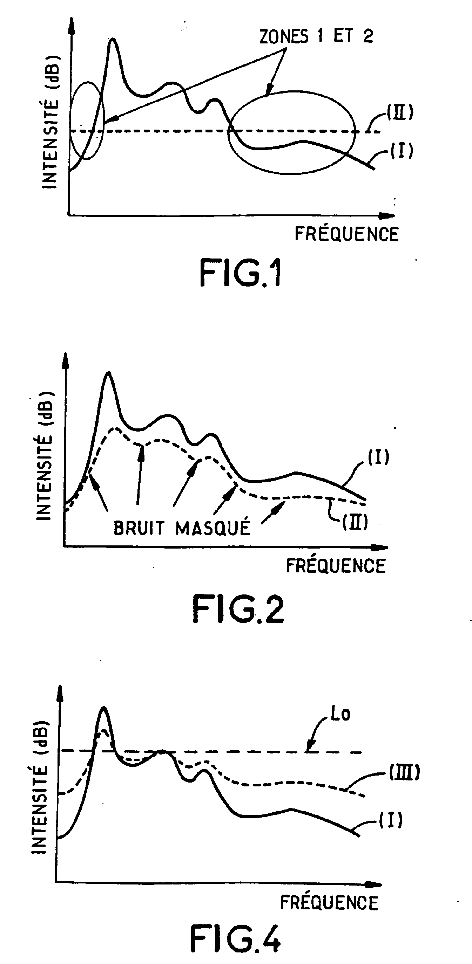

La figure 1 représente, dans un diagramme intensité du signal exprimée en dB (axe des ordonnées, échelle logarithmique) - fréquence donnée en Hz (en abscisse), le spectre de fréquence du signal audio original ou utile (courbe I) et celui du bruit à la réception (signal parasite) (courbe II) obtenus dans des systèmes de transmission selon l'art antérieur. On note que pour des fréquences où le signal audio est faible (zones 1 et 2 sur la figure 1), le bruit est clairement perceptible, conduisant ainsi à une dégradation de la qualité audio.

La figure 2 schématise dans un repère identique à celui de la figure 1, les spectres en fréquence du signal audio utile et du bruit à la réception tels qu'ils devraient être pour obtenir une qualité pratiquement parfaite pour le signal audio.

La courbe I représentative du signal audio présente un niveau toujours plus élevé que celui de la courbe II représentative du spectre du bruit à la réception. Le bruit est « masqué » dans toute la bande de fréquence considérée. Ceci conduit à une qualité de perception élevée : le bruit est masqué à toutes les fréquences, même si sa puissance totale est la même que celle du bruit dont le spectre est donné par la courbe II de la figure 1.

L'objet de l'invention concerne un système et un procédé ayant notamment pour objectif d'obtenir les résultats illustrés par les courbes de la figure 2. Le signal considéré peut être un signal audio ou de phonie (parole).

Le système retenu, inspiré par les techniques bien connues de l'Homme du métier sous l'expression « Noise Shaping » utilisées dans les vocodeurs faible débit, mais différentes de ces derniers, est divisé en deux parties :

Côté Emetteur

- un pré-traitement du signal audio utile modifiant la composition spectrale du signal audio transmis de façon telle que le spectre de fréquence moyenné dans le temps est approximativement plat, i.e, « parallèle » au spectre du bruit généré du côté récepteur après démodulation.

**Côté Récepteur**

- un post-traitement du côté du récepteur en deux étapes :

  - un nettoyage du signal visant à éliminer les pics de bruit (lorsque le bruit n'est pas Gaussien),
  - une modification inverse et sensiblement identique du spectre en fréquence de l'audio (+ bruit), afin d'avoir un signal audio avec le même spectre en fréquence (ou sensiblement le même) que le signal audio non traité.

Le signal audio ou de parole concerné dans la présente invention, possède une structure connue de l'Homme du métier qui ne sera donc pas détaillée.

**Emetteur**

Du côté de l'émetteur, le procédé selon l'invention comporte par exemple les étapes suivantes :

Etape 1 : Analyse spectrale

On effectue une analyse spectrale du signal audio initial, par exemple en utilisant une transformée de Fourier, FFT (Fast Fourier Transformation) avec fenêtrage et recouvrement partiel.

La qualité du résultat final dépend de la taille N de la FFT utilisée, de la forme de la fenêtre et du degré de recouvrement. Un choix possible, pour une fréquence d'échantillonnage de 8 à 10 KHz, consiste par exemple à utiliser une FFT de N = 200 à 300 points, une fenêtre de type Blackman-Harris avec 4 termes et une progression d'un quart de fenêtre entre deux itérations. D'autres choix sont possibles et dictés par un compromis entre la qualité et la complexité.

Etape 2 : Calcul de la variation de gain

2a - Pour chaque fréquence k = 0...N/2, calculer le niveau $a(k)$ du signal audio, $a(k)$ étant par exemple le carré du module de la valeur complexe $S(k)$ du spectre du signal audio à cette fréquence. L'idée de l'invention consiste notamment à appliquer une étape de moyennage du niveau $a(k)$ du signal pour une fréquence k donnée et à cette fréquence, afin d'exécuter les étapes suivantes du procédé selon l'invention sur une valeur lissée notée $A(k)$. Par exemple le niveau déterminé pour une fréquence k donnée peut être la moyenne pondérée des niveaux du signal aux fréquences k-1, k et k+1.

Cette étape exécutée du côté de l'émetteur permet d'obtenir une reconstitution du signal original du côté du récepteur la meilleure possible, sachant que du côté récepteur, l'étape permet d'obtenir une qualité suffisante en présence d'un fort niveau de bruit.

2b - calculer le logarithme approché de ce niveau $L(k) = \log(A_0 + A(k))$ pour tenir compte de la sensibilité « logarithmique » de l'oreille, où $A_0$ est une très petite constante positive destinée à éviter les problèmes de calcul,
2c - modifier ce logarithme L(k) en utilisant une transformation linéaire simple du type L'(k) = $L_0$ + a(L(k) - $L_0$), où $L_0$ est le niveau de référence déduit de la puissance du signal d'entrée moyennée et a est un coefficient multiplicatif constant plus petit que 1 (par exemple 0.5),
2d - modifier le niveau de signal à une fréquence (ou un groupe de fréquences) k, afin que son logarithme devienne L'(k), en appliquant à S(k) un gain réel g(k) égal à exp(0.5 (L'(k) - L(k))), par exemple, qui ne modifie pas la phase des composantes du spectre, et transforme S(k) en S'(k) = g(k) S(k). Le facteur 0.5 vient du fait que g(k) est un gain en amplitude, alors que les L(k) sont calculés à partir des puissances a(k) ou A(k).

Etape 3: revenir au signal temporel, en utilisant par exemple une transformée de Fourier inverse FFT[1], une fenêtre et un recouvrement correspondant par exemple à ceux utilisés dans l'étape 1) ; cette procédure est connue par l'Homme du métier sous l'expression « recouvrement et addition », ou « overlap-and-add » en anglais.
Le spectre de fréquence du signal audio utile obtenu à l'issue de l'étape 3 est représenté par la courbe III de la figure 4.
Etape 4: dans le domaine temporel, effectuer une pré-accentuation afin d'augmenter le niveau de signal audio pour les fréquences élevées. La pré-accentuation est par exemple effectuée en utilisant un filtre de la forme

$$H(z) = (1 + G) / (1 + G\ z^{-1})$$

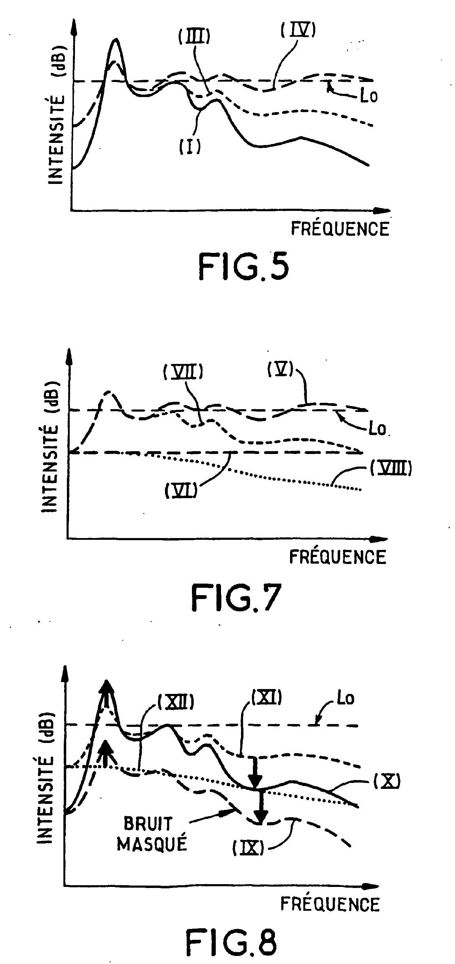

En prenant G de l'ordre de 0.7 par exemple pour une fréquence d'échantillonnage de l'ordre de 8 à 10 KHz.
Cette étape permet d'obtenir un spectre en fréquence à long terme aussi plat que possible.
La courbe IV de la figure 5 montre l'effet de l'étape de pré-accentuation sur la courbe III figure 4, qui conduit à une modification uniquement du niveau des fréquences élevées.
Les étapes du procédé décrites ci-dessus peuvent être réalisées par implantation d'un logiciel au niveau de l'émetteur (software) ou en modifiant les dispositifs électroniques composant l'émetteur.

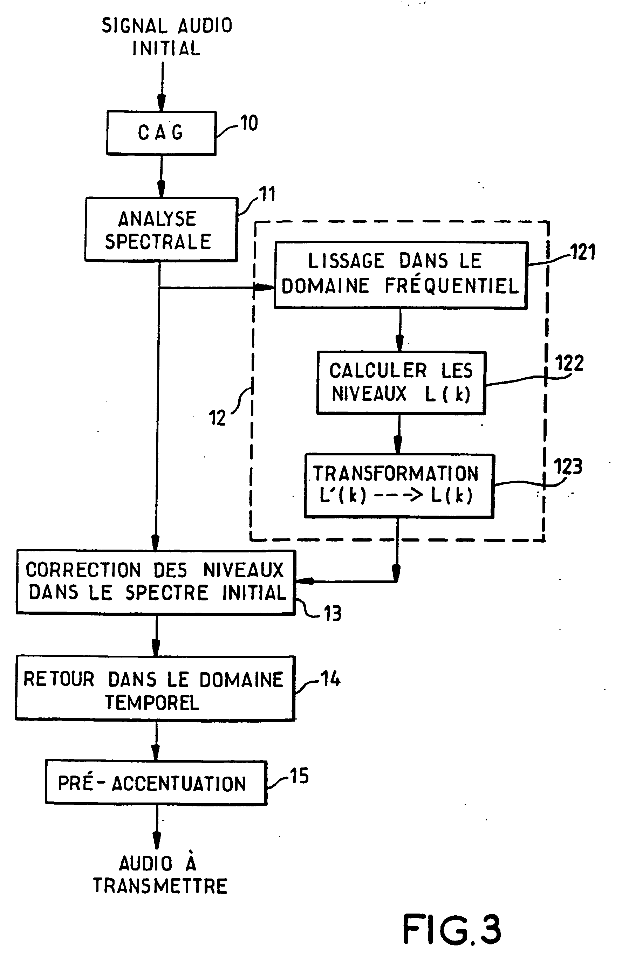

La figure 3 schématise sous la forme d'un diagramme bloc simplifié, les différents éléments du bloc de pré-traitement du dispositif codeur permettant d'exécuter les étapes 1 à 4 précitées.
Le signal audio utile $S_0$ est transmis à :

- un système de régulation automatique de gain 10 (contrôle automatique de gain ou CAG) ayant notamment pour fonction de limiter la gamme dynamique du signal audio à l'entrée afin d'obtenir une puissance moyennée quasiment constante dans le temps (sur une durée importante), et fournissant le signal $S_1$.
  Ainsi, du côté de l'émetteur, la puissance moyenne des cellules contenant les échantillons analogiques est la même que celle qui devrait exister dans le système d'origine, tout numérique. Cette régulation de gain est aussi effectuée si le niveau de référence $L_0$ du signal audio est constant ou varie lentement. La puissance moyennée après le CAG doit être proportionnelle à $L_0$.
- un dispositif 11 ayant pour fonction d'analyser le spectre du signal audio utile $S_1$ issu du CAG 10, en utilisant par exemple une transformée de Fourier rapide FFTs avec fenêtrage et recouvrement.
  Le fenêtrage et le recouvrement permettent une reconstruction du signal aussi parfaite que possible avec un coefficient a = 1, sans repliement de spectre (« aliasing ») ni artefacts.
- un dispositif 12 pour calculer la modification de gain qui dérive S'(k) de S(k). Ce dispositif 12 comporte par exemple un dispositif 121 permettant de calculer le niveau a(k) et de le lisser dans le domaine fréquentiel pour obtenir A(k), un dispositif 122 de calcul des niveaux L(k), étape 2b), un dispositif 123 permettant de transformer L(k) en L'(k), étape 2c).
  Le dispositif 121 a notamment pour fonction d'obtenir une version lissée du spectre du signal audio $S_1$. Le dispositif 121 est par exemple un filtre à réponse finie FIR (Finite Impulse Response) adapté à obtenir une valeur mesurée A(k) qui est, par exemple en pratique, une combinaison linéaire des valeurs réelles a(k), a(k+/-1), a(k+/-2) etc.
- Un dispositif 13 adapté pour modifier le module ou amplitude des composantes du spectre en fréquence initial S(k), en tenant compte de la différence L'(k) - L(k) entre les logarithmes des niveaux lissés avant et après transformation.
- Un système 14 de reconstruction temporel, basé sur une transformée de Fourier inverse et la procédure « overlapp-and-add » (recouvrement et addition).
- Un dispositif 15 pour pré-accentuer le signal dans le domaine temporel qui donne les échantillons finaux qui seront distribués dans les composantes (cellules) en phase et en quadrature des cellules de données libres de la trame transmise (ils remplacent les cellules initiales QAM).

Selon une variante de réalisation du système, la pré-accentuation peut être effectuée directement dans le domaine fréquentiel en remplaçant L'(k) par L'(k) + dL(k), où dL(k) est une constante augmentant le gain selon la fréquence k.

**Récepteur**

Au niveau de la réception, le procédé comporte par exemple les étapes suivantes :

Etape 5 : écrêter les impulsions de bruit ; les spectres du signal utile et du bruit à la réception sont représentés par les courbes V et VI données à la figure 7.
Etape 6 : désaccentuation : désaccentuer le signal en utilisant l'inverse du filtre utilisé au niveau de l'émetteur,1.e, 1/H(z), étape 4.

Les spectres en fréquence du signal utile et du bruit obtenus sont représentés sur la figure 7 par les courbes référencées VII et VIII respectivement.
Etape 7 : analyse du signal : effectuer l'analyse du signal dans le domaine fréquentiel (par exemple la même ou sensiblement la même analyse que celle réalisée au niveau de l'émetteur, c'est-à-dire utilisant la même taille de FFT, N, sensiblement la même fenêtre d'analyse et sensiblement le même recouvrement) qui doit redonner, au bruit de réception près, les composantes S'(k) du spectre en fréquence du signal modifié à l'émission.

Etape 8

8a - Pour chaque fréquence (ou groupe de fréquences) k, calculer le niveau B(k) lissé, de façon similaire à ce qui a été fait dans l'étape 2b) en lissant le signal b(k) qui est le carré du module de S'(k), par exemple en considérant une moyenne pondérée des valeurs b(k) au voisinage de la fréquence k,
8b - calculer le logarithme de ce niveau de signal L'(k) = log($A_0$+B(k)) pour chaque fréquence k,
8c - modifier ce logarithme en utilisant l'inverse de la transformation linéaire simple utilisée du côté de l'émetteur (a et $L_0$ ont les mêmes valeurs que celles utilisées lors de l'émission), ce qui conduit pour l'exemple donné à l'étape 2c) à L"(k) = $L_0$ + (1 / a) (L'(k) - $L_0$),
8d - modifier le niveau de signal à la fréquence (ou groupe de fréquences) k, afin de transformer son logarithme en L"(k), ce qui revient à appliquer à S'(k) un gain réel égal à g'(k) = exp(0.5 (L"(k) - L'(k))), toujours sans modifier les phases des composantes, pour obtenir S"(k) = g'(k) S'(k) qui, si la reconstitution était parfaite, serait égal à S(k).

Etape 9 - Revenir au signal temporel suivant le même procédé que celui de l'émetteur.

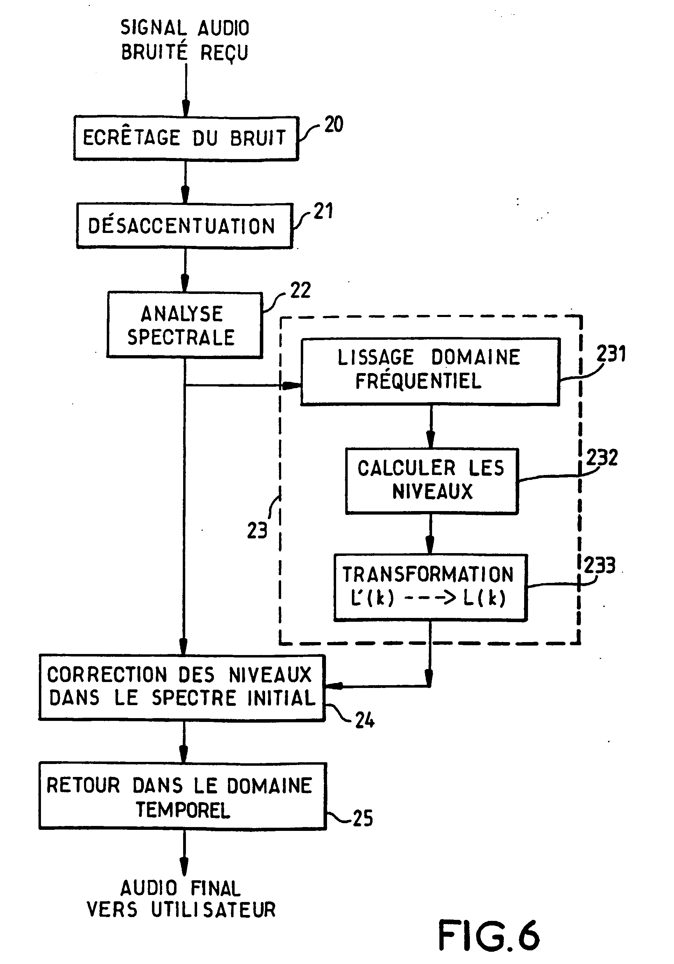

La figure 8 représente les différentes courbes résultant des différentes étapes de traitement. On remarque que le niveau de bruit, courbe IX, est inférieur au niveau du signal utile, courbe X, sur tout le domaine fréquentiel considéré. Les courbes XI et XII correspondent respectivement au signal audio et au niveau de bruit reçus après l'étape de désaccentuation.
On peut voir que le post-traitement modifie de la même façon (augmentation ou diminution) les composantes spectrales du signal et du bruit : il ne modifie pas le rapport signal/bruit local, SNR. Ce SNR devrait être aussi élevé et uniforme que possible au travers l'ensemble de la largeur de bande audio. Comme le bruit de réception présente un spectre plat à long terme, mais pas le signal audio, cela justifie a posteriori l'utilisation de la pré-accentuation et de la désaccentuation.
Les pré et les post-traitements peuvent être et sont, de préférence, totalement synchronisés. Ceci est obtenu lorsque chaque trame du signal transmis contient un nombre exact de trames audio car le récepteur connaît alors exactement quel échantillon du signal initial est présent dans chacune des cellules : cela augmente la qualité du signal de sortie, puisque les niveaux L'(k) dans le récepteur sont exactement les mêmes que les niveaux dans l'émetteur, et non des valeurs intermédiaires obtenues par une forme d'interpolation, pour lesquelles la reconstruction serait de moins bonne qualité.
Un exemple d'architecture de récepteur permettant d'exécuter les étapes 5 à 8 du procédé est donné dans la figure 6.
Les composantes du système ou du logiciel sont par exemple les suivantes :

- un système 20 d'écrêtage adaptatif qui élimine les pics de bruit lorsque leur répartition n'est pas gaussienne. Ce système peut par exemple évaluer une valeur efficace (RMS ou « Root Man Square ») à court terme du signal d'entrée et éliminer (mettre à zéro ou écrêter) les échantillons pour lesquels la valeur absolue de l'amplitude est plus grande que K fois la valeur RMS. La valeur de K peut être estimée de manière heuristique en prenant en compte les propriétés statistiques du signal audio (distribution laplacienne en première approximation). Une valeur entre 5 et 8 peut être utilisée.

- Un dispositif 21 de dé-accentuation qui compense exactement la pré-accentuation réalisée au niveau de l'émetteur.
- Un dispositif 22 d'analyse de spectre, qui peut être le même que celui (11) utilisé dans l'émetteur.
- Un dispositif 23 comportant un dispositif 231 permettant d'effectuer un lissage des valeurs de niveau de signal selon l'étape 8a), un dispositif 232 pour calculer les niveaux L'(k) (étape 8b)) et un dispositif 233 pour transformer la valeur L'(k) en une valeur L"(k) (étape 8c).
- Un dispositif 24 permettant de modifier les amplitudes des composantes dans le domaine fréquentiel du spectre initial de fréquence en tenant compte des différences L"(k) - L'(k) pour une valeur k donnée.
- Un système 25 de reconstruction de signal dans le domaine temporel qui peut être le même que le dispositif 14 utilisé au niveau de l'émetteur.

Selon une variante de réalisation du système, le dispositif 231 peut effectuer la désaccentuation (suppression du dispositif 21) directement dans le domaine fréquentiel en modifiant le niveau L'(k) à la fréquence k d'une quantité égale à -dL(k), où dL(k) est la même constante d'augmentation de gain que celle de l'émetteur.

Pour des valeurs de faible rapport signal/bruit, les niveaux individuels mesurés L'(k) ne sont pas exactement les mêmes que dans l'émetteur car le bruit a été additionné au signal utile.

Comme les échantillons de bruit (dans le domaine fréquentiel) sont indépendants aux fréquences k et k+n (quel que soit n), un filtre de type FIR passe-bas est utilisé pour obtenir une version lissée du spectre des amplitudes du signal.

Par exemple, si le niveau calculé pour la fréquence k correspond à une valeur moyenne des niveaux du signal pour les fréquences k-1, k, k+1, l'influence du bruit est divisée par 3, i.e, l'erreur fait dans l'estimation de B(k) (dont est déduit L'(k)) est trois fois plus faible que sans l'étape de lissage, conduisant ainsi à une dégradation nettement plus faible de la qualité subjective.

Les filtres de lissage S(z) utilisés au niveau de l'émetteur et au niveau du récepteur doivent naturellement être identiques pour avoir la meilleure reconstitution possible du signal audio original. Par exemple, pour un lissage utilisant les fréquences k-3,...k+3, on peut obtenir le niveau de signal B(k) à la fréquence k à partir des niveaux non lissés b(k) en utilisant le filtre F(z) donné par :

$$F(z) = (z^3 + 6\ z^2 + 15\ z + 20 + 15\ z^{-1} + 6\ z^{-2} + z^{-3})\ /\ 64$$

Soit, de façon plus explicite :

$$B(k) = (b(k+3) + 6\ b(k+2) + 15\ b(k+1) + 20\ b(k) + 15\ b(k-1) + 6\ b(k-2) + b(k+3))\ /\ 64$$

La réduction de bruit est égale à 924 / 4096, ce qui correspond approximativement à -6.5 dB avec ce filtre.

Bien entendu, le lissage peut utiliser un filtre passe-bas F(z) différent, ou encore être mis en oeuvre par des moyens plus indirects mais tout aussi efficaces. L'un de ces moyens consiste par exemple à faire la transformée de Fourier inverse des niveaux b(k), pour obtenir l'autocorrélation r(k), que l'on multiplie par un coefficient $\gamma^k$ avec $\gamma$ inférieur à 1 et dont on fait la transformée de Fourier pour obtenir directement les B(k).

Une condition très générale veut que le filtre F(z) (ou son équivalent suivant le procédé utilisé) ait des coefficients tous strictement positifs afin d'éviter que les A(k) à l'émission ou les B(k) à la réception ne puissent devenir négatifs ou nuls.

L'utilisation du lissage a notamment pour effet que, même sans bruit, la reconstruction du spectre est imparfaite si les relations théoriques entre L(k), L'(k) et L"(k) sont utilisées tel que décrit ici. Des relations différentes connues (mais complexes) pourraient être utilisées pour assurer une reconstruction parfaite, mais conduiraient à un signal audio final paradoxalement de moindre qualité subjective.

Toutefois, l'expérience montre que dans les conditions normales d'utilisation (rapport signal / bruit moyen ou faible), cette faible distorsion est imperceptible car elle « suit » le spectre du signal audio et elle est masquée par le bruit.

**Revendications**

1. - Procédé pour modifier un signal audio ou de parole comprenant les étapes suivantes :

au niveau de l'émission du signal :

o convertir le signal audio a(k) ou le signal de parole en un spectre de fréquence S(k), étape 2a,
o moyenner la valeur du niveau a(k) afin d'obtenir une valeur lissée A(k), étape 2b,
o calculer le logarithme L(k) = log(A0+A(k)) et modifier ce logarithme en utilisant une transformation linéaire simple (étape 2c) pour obtenir L'(k),
o appliquer à S(k) un gain réel g(k),
o étape 3, revenir au signal temporel et étape 4, effectuer une pré-accentuation afin d'augmenter le niveau de signal audio pour les fréquences élevées,

au niveau de la réception du signal

o étape 5 : écrêter les impulsions de bruit,
o étape 6 :désaccentuer le signal en utilisant une étape inverse de l'étape 4,
o étape 7 :effectuer l'analyse du signal dans le domaine fréquentiel,
o étape 8a : pour chaque fréquence ou groupe de fréquences k, calculer le niveau B(k) lissé de façon similaire à l'étape 2b) en lissant le signal b(k) qui correspond au carré du module de S'(k) obtenu à l'étape 7,
o étape 8b : calculer le logarithme du niveau de signal B(k), qui conduit à L'(k),
o étape 8c : modifier le logarithme L'(k) obtenu à l'étape 8b, en utilisant l'inverse de la transformation linéaire simple de l'étape 2c,
o étape 8d : modifier le niveau de signal à la fréquence k afin de transformer le logarithme
o étape 9 : revenir au signal temporel en utilisant un procédé identique à celui mis en oeuvre au niveau de l'émission dans l'étape 3.

2. -Procédé selon la revendication 1 **caractérisé en ce que** l'étape 2c correspond à une étape de transformation du type L'(k) = L0+a(L(k) - L0) où L0 est le niveau de référence déduit de la puissance du signal d'entrée moyennée et a est un coefficient multiplicatif constant plus petit que 1.

3. - Procédé selon la revendication 1 **caractérisé en ce que** l'étape 2d comprend une étape où l'on modifie le niveau de signal à une fréquence en appliquant à S(k) un gain réel g(k) égal à exp(0.5 (L'(k)-L(k)).

4. - Procédé selon la revendication 1 **caractérisé en ce que** pour revenir au signal temporel on utilise une transformée de Fourier inverse, une fenêtre et un recouvrement.

5. - Procédé selon la revendication 1 **caractérisé en ce que** lors de l'étape 4, on utilise un filtre de la forme H(z)=(1 +G)/(1 +Gz$^{-1}$).

6. - Procédé selon la revendication 5 **caractérisé en ce que** G est choisi voisin de 0.7.

7. - Procédé selon la revendication 1 **caractérisé ence que** , lorsque le signal comprend des trames constituées d'un nombre exact de trames audio, les étapes de pré et de post-traitements sont totalement synchronisées.

8. - Système de pré et de post-traitement d'un signal audio ou d'un signal de parole comprenant un émetteur et un récepteur adaptés à mettre en oeuvre les étapes du procédé selon la revendication 1.

**Claims**

1. Method for modifying an audio or speech signal comprising the following steps:

at the signal transmission level:

° converting the audio signal a (k) or the speech signal into a frequency spectrum S(k), step 2a,
° averaging the value of the level a (k) so as to obtain a smoothed value A(k), step 2b,

° calculating the logarithm L (k) = log(A0+A(k)) and modifying this logarithm using a simple linear transformation (step 2c) to obtain L'(k),

° applying a real gain g(k) to S(k),

° step 3, returning to the temporal signal and step 4, performing a pre-emphasis so as to increase the audio signal level for the high frequencies,

at the signal reception level

° step 5: clipping the noise pulses,

° step 6: de-emphasizing the signal using a step inverse to step 4,

° step 7: performing the analysis of the signal in the frequency domain,

° step 8a: for each frequency or group of frequencies k, calculating the smoothed level B(k) in a similar manner to step 2b) by smoothing the signal b(k) which corresponds to the square of the modulus of S'(k) obtained in step 7,

° step 8b: calculating the logarithm of the signal level B(k), which leads to L'(k),

° step 8c: modifying the logarithm L'(k) obtained in step 8b, by using the inverse of the simple linear transformation of step 2c,

° step 8d: modifying the signal level at the frequency k so as to transform the logarithm,

° step 9: returning to the temporal signal using a method identical to that implemented at the transmission level in step 3.

2. Method according to Claim 1, **characterized in that** step 2c corresponds to a transformation step of the type L'(k) = L0+a(L (k)-L0) where L0 is the reference level deduced from the average power of the input signal and a is a constant multiplicative coefficient smaller than 1.

3. Method according to Claim 1, **characterized in that** step 2d comprises a step where the signal level is modified at a frequency by applying a real gain g(k) equal to exp (0.5 (L' (k) -L (k)) to S (k).

4. Method according to Claim 1, **characterized in that** an inverse Fourier transform, a window and an overlap are used to return to the temporal signal.

5. Method according to Claim 1, **characterized in that** during step 4, a filter of the form $H(z)=(1+G)/(1+Gz^{-1})$ is used.

6. Method according to Claim 5, **characterized in that** G is chosen to be around 0.7.

7. Method according to Claim 1, **characterized in that**, when the signal comprises frames consisting of an exact number of audio frames, the pre- and post-processing steps are totally synchronized.

8. System for pre- and post-processing an audio signal or a speech signal comprising a transmitter and a receiver that are adapted for implementing the steps of the method according to Claim 1.

**Patentansprüche**

1. Verfahren zum Modifizieren eines Audio- oder Sprachsignals, das die folgenden Schritte enthält:

auf der Ebene des Aussendens des Signals:

- Umsetzen des Audiosignals a (k) oder des Sprachsignals in ein Frequenzspektrum S(k), Schritt 2a
- Mitteln des Wertes des Pegels a (k), um einen geglätteten Wert A(k) zu erhalten, Schritt 2b,
- Berechnen des Logarithmus L(k) = log(A0 + A(k)) und Modifizieren dieses Logarithmus unter Verwendung einer einfachen linearen Transformation (Schritt 2c), um L'(k) zu erhalten,
- Anwenden einer reellen Verstärkung g(k) auf S (k),
- Schritt 3, Zurückkehren zum zeitlichen Signal und Schritt 4, Ausführen einer Voranhebung, um den Pegel des Audiosignals für die hohen Frequenzen zu erhöhen,

auf der Ebene des Empfangs des Signals

- Schritt 5: Abschneiden der Rauschimpulse,
- Schritt 6: Absenken des Signals unter Verwendung eines in Bezug auf den Schritt 4 inversen Schrittes,
- Schritt 7: Ausführen der Analyse des Signals im Frequenzbereich,
- Schritt 8a: für jede Frequenz oder Gruppe von Frequenzen k Berechnen des Pegels B(k), der ähnlich wie im Schritt 2b geglättet ist, indem das Signal b(k) geglättet wird, das dem Quadrat des Betrags von S'(k), der im Schritt 7 erhalten wird, entspricht,
- Schritt 8b: Berechnen des Logarithmus des Pegels des Signals B(k), der zu L'(k) führt,
- Schritt 8c: Modifizieren des Logarithmus L'(k) der im Schritt 8b erhalten wird, unter Verwendung der inversen Transformation der einfachen linearen Transformation des Schrittes 2c,
- Schritt 8d: Modifizieren des Pegels des Signals bei der Frequenz k, um den Logarithmus zu transformieren,
- Schritt 9: Zurückkehren zu dem zeitlichen Signal unter Verwendung eines Verfahrens, das mit jenem, das auf der Ebene des Aussendens im Schritt 3 ausgeführt wird, identisch ist.

2. Verfahren nach Anspruch 1, **dadurch gekennzeichnet, dass** der Schritt 2c einem Transformationsschritt des Typs L'(k) = L0 + a (L (k) - L0) entspricht, wobei L0 der Referenzpegel ist, der aus der mittleren Leistung des Eingangssignals abgeleitet wird, und a ein konstanter Multiplikationskoeffizient ist, der kleiner als 1 ist.

3. Verfahren nach Anspruch 1, **dadurch gekennzeichnet, dass** der Schritt 2d einen Schritt enthält, in dem der Pegel des Signals mit einer Frequenz modifiziert wird, indem auf S(k) eine reelle Verstärkung g(k) angewendet wird, die gleich exp (0, 5 (L' (k) - L (k)) ist.

4. Verfahren nach Anspruch 1, **dadurch gekennzeichnet, dass** für die Rückkehr zum zeitlichen Signal eine inverse Fourier-Transformation, ein Fenster und eine Überdeckung verwendet werden.

5. Verfahren nach Anspruch 1, **dadurch gekennzeichnet, dass** im Schritt 4 ein Filter der Form $H(z) = (1 + G) / (1 + Gz^{-1})$ verwendet wird.

6. Verfahren nach Anspruch 5, **dadurch gekennzeichnet, dass** G in der Umgebung von 0,7 gewählt wird.

7. Verfahren nach Anspruch 1, **dadurch gekennzeichnet, dass** dann, wenn das Signal Rahmen enthält, die aus einer exakten Anzahl von Audiorahmen gebildet sind, die Vor- und Nachverarbeitungsschritte vollständig synchronisiert sind.

8. System zum Vor- und Nachverarbeiten eines Audiosignals oder eines Sprachsignals, das einen Sender und einen Empfänger enthält, die ausgelegt sind, um die Schritte des Verfahrens nach Anspruch 1 auszuführen.

**FIG.1**

**FIG.2**

**FIG.4**

SIGNAL AUDIO
INITIAL

CAG ⌐10

ANALYSE
SPECTRALE ⌐11

LISSAGE DANS LE
DOMAINE FRÉQUENTIEL ⌐121

12

CALCULER LES
NIVEAUX L ( k ) ⌐122

TRANSFORMATION
L'( k ) --> L( k ) ⌐123

CORRECTION DES NIVEAUX
DANS LE SPECTRE INITIAL ⌐13

RETOUR DANS LE DOMAINE
TEMPOREL ⌐14

PRÉ- ACCENTUATION ⌐15

AUDIO À
TRANSMETTRE

FIG.3

FIG.5

FIG.7

FIG.8

SIGNAL AUDIO
BRUITÉ REÇU

↓

ECRÊTAGE DU BRUIT ⟍20

↓

DÉSACCENTUATION ⟍21

↓

ANALYSE
SPECTRALE ⟍22

LISSAGE DOMAINE
FRÉQUENTIEL ⟍231

↓

CALCULER LES
NIVEAUX ⟍232

↓

TRANSFORMATION
L'(k) ---> L(k) ⟍233

23

CORRECTION DES NIVEAUX
DANS LE SPECTRE INITIAL ⟍24

↓

RETOUR DANS LE DOMAINE
TEMPOREL ⟍25

↓

AUDIO FINAL
VERS UTILISATEUR

FIG.6

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9806090 A
- US 5465396 A